# EUROPEAN PATENT APPLICATION

(11) **EP 4 629 692 A1**
(43) Date of publication of application: **08.10.2025**
(21) Application number: 25165990.0
(22) Date of filing: 25.03.2025
(51) Int. Cl.: H04W 24/10, H04B 7/06

(54) **EVENT-TRIGGERED REPORTING**

(30) Priority: 04.04.2024 GB 202404777
(71) Applicant: Nokia Technologies Oy, 02610 Espoo (FI)
(72) Inventor: KOSKELA, Timo, Oulu (FI); HAKOLA, Sami-Jukka, Oulu (FI); KARJALAINEN, Juha Pekka, Sotkamo (FI); CAPORAL DEL BARRIO, Samantha, Aalborg (DK)
(74) Representative: Nokia EPO representatives

(57) **Abstract**

Example embodiments relate to event-triggered reporting. For example, a method may comprise: obtaining a first priority level associated with a first event-triggered channel state information, CSI, report for being transmitted to a network node; and determining whether to transmit or not, to the network node at a time occasion, the first event-triggered CSI report, or a message associated with the first event-triggered CSI report, based at least in part on the first priority level.

## Description

### Field

Example embodiments relate to event-triggered reporting.

### Background

The Third Generation Partnership Project (3GPP) has and is developing standards for Fourth Generation (4G), also known as Long Term Evolution (LTE), and Fifth Generation (5G), also known as New Radio (NR), communications systems. In relation to 5G NR communications systems, and future communications systems, throughput and network capacity can be increased by using massive Multiple Input and Multiple Output (MIMO) technologies with beamforming, whereby a network entity can establish and communicate over relatively narrow beams directed towards individual user terminals.

The process of determining which beam or beams to use may generally be referred to as beam management and may involve a process of reporting beam measurements and/or indicating which beam or beams to switch to.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

A first aspect provides an apparatus, comprising: means for obtaining a first priority level associated with a first event-triggered channel state information, CSI, report for being transmitted to a network node; and means for determining whether to transmit or not, to the network node at a time occasion, the first event-triggered CSI report, or a message associated with the first event-triggered CSI report, based at least in part on the first priority level.

In some example embodiments, the message associated with the first event-triggered CSI report may comprise at least one of: a request for uplink resource(s) for subsequently transmitting the first event-triggered CSI report; or an indication that the first event-triggered CSI report will be reported at a subsequent time occasion.

In some example embodiments, the apparatus may further comprise: means for obtaining a second priority level associated with a second event-triggered CSI report for being transmitted to the network node at the time occasion, wherein the means for determining is configured to: determine to transmit at least one of the first event-triggered CSI report or the second event-triggered CSI report, or the message associated with the first event-triggered CSI report or the second event-triggered CSI report, to the network at the time occasion, based at least in part on the first and second priority levels.

In some example embodiments, the means for determining may be configured to determine to transmit at least one of the first event-triggered CSI report or the second event-triggered CSI report, or the message associated with the first event-triggered CSI report or the second event-triggered CSI report, further based on: determining that only one event-triggered CSI report, or only one message associated with the event-triggered CSI report, can be transmitted at the time occasion.

In some example embodiments, the means for determining may be configured to determine to transmit at least one of the first event-triggered CSI report or the second event-triggered CSI report, or the message associated with the first event-triggered CSI report or the second event-triggered CSI report, further based on: identifying that an event that triggered the second event-triggered CSI report occurred within a time period, N, prior to the time occasion.

In some example embodiments, the time period, N, may be received from a network node. In some example embodiments, the time period, N, may be hard-coded in the apparatus.

In some example embodiments, in the event that the first priority level is higher than the second priority level, the means for determining may be configured to determine to: transmit the first event-triggered CSI report, or the message associated with the first event-triggered CSI report to the network node at the time occasion.

In some example embodiments, in the event that the second priority level is higher than the first priority level, the means for determining may be configured to determine to: transmit the second event-triggered CSI report, or the message associated with the first event-triggered CSI report, to the network node at the time occasion.

In some example embodiments, in the event that the first and second priority levels are the same, the means for determining may be configured to determine to: transmit one of the first and second event-triggered CSI reports, or the messages associated with the first event-triggered CSI report or the second event-triggered CSI report, to the network node at the time occasion, based one or more other parameter(s). The one or more other parameter(s) may comprise at least one of: a timing order at which first and second events, respectively associated with the first and second event-triggered CSI reports, occurred; respective payload sizes associated with the respective first and second event-triggered CSI reports; respective serving cell identifiers associated with the first and second events; or a network-configured parameter.

In some example embodiments, the apparatus may further comprise: means for receiving a reporting configuration associated with at least the first event-triggered CSI report, wherein the at least first priority level is a value indicated in a predetermined field of the reporting configuration. In some example embodiments, the reporting configuration may indicate an event that will trigger generating the at least first event-triggered CSI report. In some example embodiments, the at least first priority level may be indicated by a numerical value. In some example embodiments, a lower numerical value may indicate a higher priority level. In some example embodiments, a higher numerical value may indicate a higher priority level.

In some example embodiments, the apparatus may further comprise means for receiving an updated at least first priority level from the network node or another network node.

In some example embodiments, the at least first event-triggered CSI report may be associated with a beam reporting event. In some example embodiments, the at least first event-triggered CSI report may be associated with at least one of: an event in which a quality of a current beam is worse than a certain threshold; an event in which a quality of at least one new beam becomes a threshold value better than a current beam; an event in which a quality of a new beam is better than a certain threshold; or an event in which a quality of a current beam is worse than a first threshold and a quality of at least one new beam is better than a second threshold.

In some example embodiments, the apparatus may comprise a user terminal.

A second aspect provides a method comprising: obtaining a first priority level associated with a first event-triggered channel state information, CSI, report for being transmitted to a network node; and determining whether to transmit or not, to the network node at a time occasion, the first event-triggered CSI report, or a message associated with the first event-triggered CSI report, based at least in part on the first priority level.

In some example embodiments, the message associated with the first event-triggered CSI report may comprise at least one of: a request for uplink resource(s) for subsequently transmitting the first event-triggered CSI report; or an indication that the first event-triggered CSI report will be reported at a subsequent time occasion.

In some example embodiments, the method may further comprise: obtaining a second priority level associated with a second event-triggered CSI report for being transmitted to the network node at the time occasion, wherein the determining comprises determining to transmit at least one of the first event-triggered CSI report or the second event-triggered CSI report, or the message associated with the first event-triggered CSI report or the second event-triggered CSI report, to the network at the time occasion, based at least in part on the first and second priority levels.

In some example embodiments, the determining may determine to transmit at least one of the first event-triggered CSI report or the second event-triggered CSI report, or the message associated with the first event-triggered CSI report or the second event-triggered CSI report, further based on: determining that only one event-triggered CSI report, or only one message associated with the event-triggered CSI report, can be transmitted at the time occasion.

In some example embodiments, the determining may determine to transmit at least one of the first event-triggered CSI report or the second event-triggered CSI report, or the message associated with the first event-triggered CSI report or the second event-triggered CSI report, further based on: identifying that an event that triggered the second event-triggered CSI report occurred within a time period, N, prior to the time occasion.

In some example embodiments, the time period, N, may be received from a network node. In some example embodiments, the time period, N, may be hard-coded in an apparatus for performing the method.

In some example embodiments, in the event that the first priority level is higher than the second priority level, the determining may determine to: transmit the first event-triggered CSI report, or the message associated with the first event-triggered CSI report to the network node at the time occasion.

In some example embodiments, in the event that the second priority level is higher than the first priority level, the determining may determine to: transmit the second event-triggered CSI report, or the message associated with the first event-triggered CSI report, to the network node at the time occasion.

In some example embodiments, in the event that the first and second priority levels are the same, the determining may determine to: transmit one of the first and second event-triggered CSI reports, or the messages associated with the first event-triggered CSI report or the second event-triggered CSI report, to the network node at the time occasion, based one or more other parameter(s). The one or more other parameter(s) may comprise at least one of: a timing order at which first and second events, respectively associated with the first and second event-triggered CSI reports, occurred; respective payload sizes associated with the respective first and second event-triggered CSI reports; respective serving cell identifiers associated with the first and second events; or a network-configured parameter.

In some example embodiments, the method may further comprise: receiving a reporting configuration associated with at least the first event-triggered CSI report, wherein the at least first priority level is a value indicated in a predetermined field of the reporting configuration. In some example embodiments, the reporting configuration may indicate an event that will trigger generating the at least first event-triggered CSI report. In some example embodiments, the at least first priority level may be indicated by a numerical value. In some example embodiments, a lower numerical value may indicate a higher priority level. In some example embodiments, a higher numerical value may indicate a higher priority level.

In some example embodiments, the method may further comprise receiving an updated at least first priority level from the network node or another network node.

In some example embodiments, the at least first event-triggered CSI report may be associated with a beam reporting event. In some example embodiments, the at least first event-triggered CSI report may be associated with at least one of: an event in which a quality of a current beam is worse than a certain threshold; an event in which a quality of at least one new beam becomes a threshold value better than a current beam; an event in which a quality of a new beam is better than a certain threshold; or an event in which a quality of a current beam is worse than a first threshold and a quality of at least one new beam is better than a second threshold.

In some example embodiments, the method may be performed by a user terminal.

A third aspect provides a non-transitory computer-readable medium having stored thereon computer-readable code, which, when executed by at least one processor, causes the at least one processor to perform a method, comprising: obtaining a first priority level associated with a first event-triggered channel state information, CSI, report for being transmitted to a network node; and determining whether to transmit or not, to the network node at a time occasion, the first event-triggered CSI report, or a message associated with the first event-triggered CSI report, based at least in part on the first priority level.

In some example embodiments, the third aspect may include any other feature mentioned with respect to the second aspect.

A fourth aspect provides a computer program comprising a set of instructions which, when executed on an apparatus, is configured to cause the apparatus to carry out a method comprising: obtaining a first priority level associated with a first event-triggered channel state information, CSI, report for being transmitted to a network node; and determining whether to transmit or not, to the network node at a time occasion, the first event-triggered CSI report, or a message associated with the first event-triggered CSI report, based at least in part on the first priority level.

In some example embodiments, the fourth aspect may include any other feature mentioned with respect to the second aspect.

A fifth aspect provides an apparatus, the apparatus having at least one processor and at least one memory storing instructions that, when executed by the at least one processor, cause the apparatus to: obtain a first priority level associated with a first event-triggered channel state information, CSI, report for being transmitted to a network node; and determine whether to transmit or not, to the network node at a time occasion, the first event-triggered CSI report, or a message associated with the first event-triggered CSI report, based at least in part on the first priority level.

In some example embodiments, the fifth aspect may include any other feature mentioned with respect to the second aspect.

A sixth aspect provides an apparatus, comprising: means for detecting a plurality of events for triggering respective reports for transmission to a network node; means for obtaining respective priority levels associated with the respective reports; means for identifying a report from the respective reports, or a message associated with a report from the respective reports, for transmission at a first time occasion; and means for determining to transmit the identified report, or a message associated with the identified report, to the network node at the first time occasion, wherein the identifying is based at least in part on the respective priority levels.

In some example embodiments, the first time occasion may be selected from a set of available time occasions and is that which occurs after detecting the plurality of events.

In some example embodiments, the means for determining is configured to determine to transmit the identified report, or the message associated with the identified report, further based on: identifying that the event that triggered the identified report occurred within a time period, N, prior to the first time occasion. In some example embodiments, the time period, N, may be received from a network node. In some example embodiments, the time period, N, may be hard-coded in the apparatus.

In some example embodiments, the identified report is that associated with the highest priority level.

In some example embodiments, the means for determining may be further configured to: determine to transmit a different identified report, or a message associated with the different identified report, to the network node at a second time occasion, being after the first time occasion, wherein the different identified reports is that associated with the next available highest priority level.

In some example embodiments, in the event that respective priority levels associated with two or more respective reports indicate a same priority level, the identification may be based on one or more other parameter(s).

In some example embodiments, the one or more other parameter(s) may comprise at least one of: a timing order at which the events that triggered the two or more respective reports, occurred; respective payload sizes associated with the respective two or more reports; respective serving cell identifiers associated with the events which triggered the two or more respective report; or a network-configured parameter.

In some example embodiments, the message associated with the identified report may comprise at least one of: a request for uplink resource(s) for subsequently transmitting the identified report; or an indication that the identified report will be reported at a subsequent time occasion.

In some example embodiments, the apparatus may further comprise: means for storing respective reporting configurations associated with the respective reports, wherein the respective priority levels may comprise respective values indicated in a predetermined field of the respective reporting configurations.

In some example embodiments, respective reporting configurations may be indicative of the respective events that trigger the respective reports.

In some example embodiments, the respective priority levels may comprise respective numerical values. In some example embodiments, a lower numerical value may indicate a higher priority level, or vice versa.

In some example embodiments, the apparatus may further comprise: means for receiving at least one updated priority level from the network node or another network node.

In some example embodiments, the respective reports may be associated with respective beam reporting events.

In some example embodiments, a report of the respective reports may be associated with at least one of: an event in which a quality of a current beam is worse than a certain quality threshold; an event in which a quality of at least one new beam becomes a threshold value better than a current beam; an event in which a quality of a new beam is better than a certain quality threshold; or an event in which a quality of a current beam is worse than a first quality threshold and a quality of at least one new beam is better than a second threshold.

In some example embodiments, the apparatus may comprise a user terminal.

A seventh aspect provides a method, comprising: detecting a plurality of events for triggering respective reports for transmission to a network node; obtaining respective priority levels associated with the respective reports; means for identifying a report from the respective reports, or a message associated with a report from the respective reports, for transmission at a first time occasion; and determining to transmit the identified report, or a message associated with the identified report, to the network node at the first time occasion, wherein the identifying is based at least in part on the respective priority levels.

In some example embodiments, the first time occasion may be selected from a set of available time occasions and is that which occurs after detecting the plurality of events.

In some example embodiments, the determining may determine to transmit the identified report, or the message associated with the identified report, further based on: identifying that the event that triggered the identified report occurred within a time period, N, prior to the first time occasion. In some example embodiments, the time period, N, may be received from a network node. In some example embodiments, the time period, N, may be hard-coded in the apparatus.

In some example embodiments, the identified report is that associated with the highest priority level.

In some example embodiments, the determining may determine to transmit a different identified report, or a message associated with the different identified report, to the network node at a second time occasion, being after the first time occasion, wherein the different identified reports is that associated with the next available highest priority level.

In some example embodiments, in the event that respective priority levels associated with two or more respective reports indicate a same priority level, the identification may be based on one or more other parameter(s).

In some example embodiments, the one or more other parameter(s) may comprise at least one of: a timing order at which the events that triggered the two or more respective reports, occurred; respective payload sizes associated with the respective two or more reports; respective serving cell identifiers associated with the events which triggered the two or more respective report; or a network-configured parameter.

In some example embodiments, the message associated with the identified report may comprise at least one of: a request for uplink resource(s) for subsequently transmitting the identified report; or an indication that the identified report will be reported at a subsequent time occasion.

In some example embodiments, the method may further comprise: storing respective reporting configurations associated with the respective reports, wherein the respective priority levels may comprise respective values indicated in a predetermined field of the respective reporting configurations.

In some example embodiments, respective reporting configurations may be indicative of the respective events that trigger the respective reports.

In some example embodiments, the respective priority levels may comprise respective numerical values. In some example embodiments, a lower numerical value may indicate a higher priority level, or vice versa.

In some example embodiments, the method may further comprise: receiving at least one updated priority level from the network node or another network node.

In some example embodiments, the respective reports may be associated with respective beam reporting events. In some example embodiments, a report of the respective reports may be associated with at least one of: an event in which a quality of a current beam is worse than a certain quality threshold; an event in which a quality of at least one new beam becomes a threshold value better than a current beam; an event in which a quality of a new beam is better than a certain quality threshold; or an event in which a quality of a current beam is worse than a first quality threshold and a quality of at least one new beam is better than a second threshold.

In some example embodiments, the method may be performed at a user terminal.

An eighth aspect provides a non-transitory computer-readable medium having stored thereon computer-readable code, which, when executed by at least one processor, causes the at least one processor to perform a method, comprising: detecting a plurality of events for triggering respective reports for transmission to a network node; obtaining respective priority levels associated with the respective reports; identifying a report from the respective reports, or a message associated with a report from the respective reports, for transmission at a first time occasion; and determining to transmit the identified report, or a message associated with the identified report, to the network node at the first time occasion, wherein the identifying is based at least in part on the respective priority levels.

In some example embodiments, the eighth aspect may include any other feature mentioned with respect to the seventh aspect.

A ninth aspect provides a computer program comprising a set of instructions which, when executed on an apparatus, is configured to cause the apparatus to carry out a method comprising: detecting a plurality of events for triggering respective reports for transmission to a network node; obtaining respective priority levels associated with the respective reports; identifying a report from the respective reports, or a message associated with a report from the respective reports, for transmission at a first time occasion; and determining to transmit the identified report, or a message associated with the identified report, to the network node at the first time occasion, wherein the identifying is based at least in part on the respective priority levels.

In some example embodiments, the ninth aspect may include any other feature mentioned with respect to the seventh aspect.

A tenth aspect provides an apparatus, the apparatus having at least one processor and at least one memory storing instructions that, when executed by the at least one processor, cause the apparatus to: detect a plurality of events for triggering respective reports for transmission to a network node; obtain respective priority levels associated with the respective reports; identify a report from the respective reports, or a message associated with a report from the respective reports, for transmission at a first time occasion; and determine to transmit the identified report, or a message associated with the identified report, to the network node at the first time occasion, wherein the identifying is based at least in part on the respective priority levels.

In some example embodiments, the tenth aspect may include any other feature mentioned with respect to the seventh aspect.

An eleventh aspect provides an apparatus, comprising: means for configuring a user terminal with at least one priority level associated with a respective at least one event-triggered channel state information, CSI, reporting configuration, or a message associated with the at least one event-triggered CSI reporting configuration; and means for receiving or not receiving from the user terminal at a time occasion, a first event-triggered CSI report, or a message associated with the first event-triggered CSI report, based at least in part on the at least one priority level.

In some example embodiments, the apparatus may comprise a network node. For example, the network node may comprise an eNB, a gNB or a TRP.

A twelfth aspect provides a method, comprising: configuring a user terminal with at least one priority level associated with a respective at least one event-triggered channel state information, CSI, reporting configuration, or a message associated with the at least one event-triggered CSI reporting configuration; and receiving or not receiving from the user terminal at a time occasion, a first event-triggered CSI report, or a message associated with the first event-triggered CSI report, based at least in part on the at least one priority level.

In some example embodiments, the method may be performed by a network node. For example, the network node may comprise an eNB, a gNB or a TRP.

A thirteenth aspect provides a computer program comprising a set of instructions which, when executed on an apparatus, is configured to cause the apparatus to carry out a method comprising: configuring a user terminal with at least one priority level associated with a respective at least one event-triggered channel state information, CSI, reporting configuration, or a message associated with the at least one event-triggered CSI reporting configuration; and receiving or not receiving from the user terminal at a time occasion, a first event-triggered CSI report, or a message associated with the first event-triggered CSI report, based at least in part on the at least one priority level.

A fourteenth aspect provides a non-transitory computer-readable medium having stored thereon computer-readable code, which, when executed by at least one processor, causes the at least one processor to perform a method, comprising: configuring a user terminal with at least one priority level associated with a respective at least one event-triggered channel state information, CSI, reporting configuration, or a message associated with the at least one event-triggered CSI reporting configuration; and receiving or not receiving from the user terminal at a time occasion, a first event-triggered CSI report, or a message associated with the first event-triggered CSI report, based at least in part on the at least one priority level.

A fifteenth aspect provides an apparatus, the apparatus having at least one processor and at least one memory storing instructions that, when executed by the at least one processor, cause the apparatus to: configure a user terminal with at least one priority level associated with a respective at least one event-triggered channel state information, CSI, reporting configuration, or a message associated with the at least one event-triggered CSI reporting configuration; and receive or not receive from the user terminal at a time occasion, a first event-triggered CSI report, or a message associated with the first event-triggered CSI report, based at least in part on the at least one priority level.

### Brief Description of the Drawings

The invention will now be described, by way of non-limiting example, with reference to the accompanying drawings, in which:
FIG. 1 illustrates a system according to an example embodiment;
FIG. 2 is a flow diagram indicating operations according to an example embodiment;
FIG. 3 is a block diagram of a user terminal according to an example embodiment;
FIG. 4 is a schematic view of a timeline comprising one or more messages according to an example embodiment;
FIG. 5 is a flow diagram indicating operations according to another example embodiment;
FIG. 6 is a flow diagram indicating operations according to another example embodiment;
FIG. 7 is a flow diagram indicating operations according to another example embodiment;
FIG. 8 is a block diagram of an apparatus which may be configured according to an example embodiment; and
FIG. 9 illustrates a non-transitory computer-readable medium which may comprise instructions that when executed by an apparatus may perform operations according to an example embodiment.

### Detailed Description

Example embodiments relate to event-triggered reporting.

Example embodiments may particularly relate to event-triggered reporting wherein one or more events at a user terminal trigger the transmission of one or more reports to a network node.

Example embodiments may relate to prioritized event-triggered reporting, wherein a determination is made as to whether to transmit or not to transmit to a network node a particular event-triggered report, or a message associated with a particular event-triggered report, based at least in part on a priority level associated with the event-triggered report.

An associated message in this context may comprise a request for uplink resources for transmitting the particular event-triggered report to the network node and/or an indication to the network node that the particular event-triggered report will be transmitted at a subsequent time.

Example embodiments will be described in relation to beam management but are not limited to such examples.

In relation to 5G NR, massive Multiple Input Multiple Output (MIMO) and beamforming technologies are used to provide enhanced throughput and capacity. Massive MIMO employs multi-antenna arrays and spatial multiplexing to transmit independent and separately encoded data signals or data streams. When employed at a network node which may comprise part of a Radio Access Network (RAN), this may permit simultaneous communications with a plurality of user terminals over same time and frequency resources. Beamforming is used with massive MIMO technologies to provide directional beams for transmitting the data streams to respective user terminals with good connectivity and reduced interference. Beam management may refer to the process whereby a particular device determines which beam(s) to use. Beam management may involve beamforming, beam selection and beam switching with the aim of maintaining good connectivity despite issues such as path loss and/or changes in user terminal position and/or orientation. Beam management is particularly, although not exclusively, applicable to Frequency Range 2 (FR2) communications for 5G NR.

According to 3GPP Release 17, beam management may employ the so-called unified TCI state framework, applicable to both downlink and uplink channels, whereby a beam to switch to can be indicated by a network node to the user terminal with an indicated TCI state corresponding to the target beam. The channel may comprise at least one of a Physical Downlink Shared Channel (PDSCH), a Physical Downlink Control Channel (PDCCH), a Channel State Information Reference Signal (CSI-RS), a Physical Uplink Shared Channel (PUSCH), a Physical Uplink Control Channel (PUCCH) or a Sounding Reference Signal (SRS) channel. The network node may, for example, indicate to the user terminal a target TCI state which may include an indication of at least one particular source reference signal (RS) associated with the target beam, which the user terminal may use for subsequent transmission and/or reception assumptions. It is assumed that the skilled person is familiar with beam management in this context, including intra and inter -cell beam management.

According to 3GPP Release 19, an objective is user terminal event-triggered measurement reporting. In other words, it is the user terminal rather than the network node that initiates beam switching thereby to reduce overhead and/or latency. Again, the unified TCI state framework may be used. In Release 19 (and potentially beyond Release 19) the event-triggered measurement reporting (e.g. L1 measurements) is an objective for MIMO enhancements and LTM (L2 triggered mobility, lower layer triggered mobility, and L1/L2 triggered/centric mobility).

A user terminal may for example monitor and measure one or more RSs for a current beam and for one or more other beams to determine if one or more predetermined trigger conditions are met. If so, it may be determined by the user terminal that a particular event has occurred which may trigger the transmission of a report, for example a Channel State Information (CSI) report, to a network node.

The report may include one or more measurements relating to the one or more measured beams and/or an indication of a beam or beams to switch to.

The time and frequency resources used by the user terminal to report the measurements and/or indications may be controlled by the network node.

The report may for example comprise CSI information including, for example, a Channel Quality Indicator (CQI), precoding matrix indicator (PMI), CSI-RS resource indicator (CRI), SS/PBCH Block Resource indicator (SSBRI), layer indicator (LI), rank indicator (RI), a L1-RSRP CapabilityIndex, L1-SINR CapabilityIndex and or time-domain channel properties (TDCP).

The report may be transmitted on one or more time and frequency resource(s). The time resource may be referred to as a time occasion. The time occasion may be preconfigured and known to the user terminal or may be signalled from a network node.

In some cases, the user terminal may require the network node to allocate one or more uplink resource(s) for sending the report.

The user terminal may transmit to the network node at a particular time occasion a message associated with the CSI report for requesting such uplink resource(s). The user terminal may then receive from the network node an uplink resource allocation which may include the reporting occasion. The user terminal may then transmit the report at the reporting occasion.

The user terminal may in some cases need to indicate to the network node that the report will be transmitted and hence may transmit to the network node at a particular time occasion a message providing said indication.

The user terminal may be configured with a plurality of event-triggered reporting configurations.

The plurality of event-triggered reporting configurations may be associated with respective sets of configuration information which may indicate how a particular event may be triggered and how to report the event to a network node.

A particular reporting configuration may comprise, for example, a definition of how the user terminal is to report measurements, triggering criteria, one or more RSs used for performing measurements and/or a reporting format. Variations are possible.

A particular reporting configuration may, for example, include an indication of one or more resources on which to: (i) transmit the particular report and/or (ii) transmit an associated message such as a request for uplink resource(s) and/or an indication that the report will be sent, as described above.

The plurality of reporting configurations may be received from a network node and provided at, e.g., stored at, the user terminal.

In the case that two or more reporting configurations indicate a same time resource (time occasion) or the UE is not able to transmit two or more reports occupying same time resources (but can e.g. occupy different frequency resources) for transmitting respective event-triggered reports (and or other CSI reports such as aperiodic/semi-persistent or periodic), or an associated message, there may be a conflict in the sense that the network node may not be able to identify which of two or more events triggered a received report or associated message and/or the UE may need to be able to determine which of the reports it shall transmit.

In the case that two or more reporting configurations indicate different time resources for transmitting respective event-triggered reports, or an associated message, the user terminal may not be capable of handling the transmission of two or more reports or associated messages concurrently.

In the case that two or more reporting configurations indicate same time resources for transmitting respective event-triggered reports (and or other CSI reports such as aperiodic/semi-persistent or periodic), or an associated message, the user terminal may not be capable of handling the transmission of two or more reports or associated messages concurrently.

In other example embodiments, the message associated with the event-triggered report may be one of a scheduling request (SR), PRACH preamble, SRS, PUCCH (e.g. a UCI format carried in PUCCH) or other UL signal indicating an event.

In other example embodiments, the message associated with the event-triggered report may be assigned with a priority value. As an example, the message associated with the event triggered report (that may be associated with a priority value) may be used to determine which report is selected to be transmitted. In some examples the message associated with the event-triggered report may be a scheduling request (SR) which may be assigned with a priority value. In some examples, the UE may be configured with one or more SRs (or the message(s) associated with the event-triggered report(s) or reporting) each associated with a priority value for specific or the specific reporting configuration.

In general, independent events corresponding to two or more reporting configurations may, if triggered close together in time, exceed the user terminal's capability and/or the amount of uplink resources available for transmitting event-triggered reports, or associated messages. For example, if a network node allocates uplink resources according to the chronological order in which the events occurred, there may be no time resources available for reporting later-occurring events which may be more important (e.g., time-critical) than earlier events.

Example embodiments aim to avoid and/or alleviate such issues, as will be explained below.

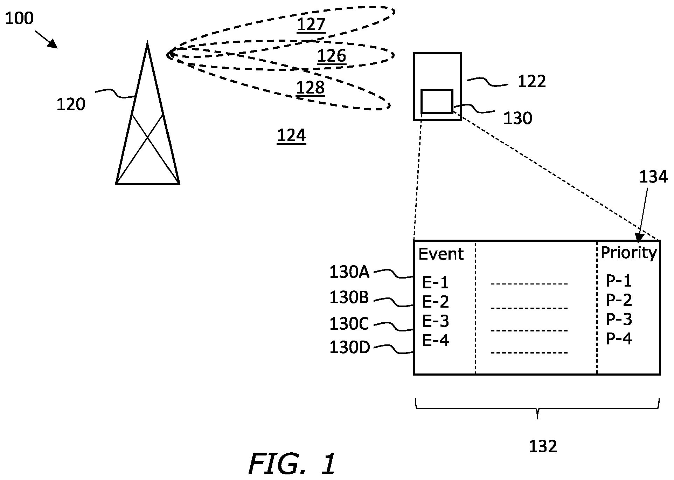

FIG. 1 illustrates a network scenario 100 comprising a network node 120 and a user terminal 122.

Although one user terminal 122 is shown, in other example embodiments, there may be a plurality of user terminals which may be configured to operate in the same or similar way as explained below.

The network node 120 may comprise, but is not limited to, a gNB (in the context of 5G/NR or future generation technologies) or a Transmission and Reception Point (TRP) or a relay node.

The network node 120 may be connected to one or more other network nodes (not shown) and/or one or more other network functions (not shown) which may comprise part of a core network or similar.

The user terminal 122 may comprise a user equipment (UE) such as, but not limited to, a mobile telephone, a tablet computer, a laptop computer, a personal computer, an Internet-of-Things (IoT) device, a digital assistant or a wearable terminal such as a smartwatch.

The user terminal 122 may be configured to transmit data over an air interface 124 to the network node 120 using one or more uplink channels. The network node 120 may be configured to receive data transmitted over the air interface 124 by the user terminal 122 using the one or more uplink channels. The data may be transmitted using one or more uplink (time and frequency) resources and the time resource may hereafter be referred to as an occasion or time occasion.

The network node 120 may be configured to transmit data over the air interface 124 to the user terminal 122 using one or more downlink channels. The user terminal 122 may be configured to receive the data transmitted over the air interface 124 by the network node 120 using the one or more downlink channels. The data may be transmitted using one or more downlink (time and frequency) resources and the time resource may hereafter be referred to as an occasion or time occasion.

FIG. 1 shows that a current beam 126 is used by the network node 120 for downlink communications; one or more other beams 127, 128 are available which the user terminal 122 may determine to be preferential for downlink communications now or at a later time based on one or more measurements performed by the user terminal.

The air interface 124 may comprise a cellular air interface associated with a Radio Access Technology (RAT) that both the network node 120 and user terminal 122 are configured to support, for example 5G/NR or a future generation RAT.

The user terminal 122 may store or otherwise access a set of configuration data 130.

The configuration data 130 may be received from the network node 120 or a different network node (not shown) at an earlier time.

The configuration data 130 may be updated by the network node 120 or a different network node (not shown) at one or more subsequent times.

The configuration data 130 may comprise a dataset representing a plurality of reporting configurations 130A - 130D.

In other example embodiments there may be fewer number of reporting configurations or a greater number of reporting configurations.

The reporting configurations 130A - 130D may be associated with different respective events, referred to herein as E-1 to E-4, and therefore with producing different event-triggered reports.

Each of the reporting configurations 130A - 130D may comprise information 132 including, for example, one or more of definitions of triggering criteria associated with the respective events E-1 to E-4, how the respective events, once triggered, may be reported (transmitted) to the network node 120, one or more RSs used for performing measurements associated with the respective events, and a reporting format. For example, the information 132 may indicate that a particular event, once triggered, is to be reported to the network node 120, and/or that a request for uplink resource(s) for transmitting said report should be transmitted to the network node 120, and/or that an indication that the report will be sent should be transmitted to the network node.

The particular time occasion at which said report(s) or associated messages may be transmitted may be provided in the reporting configurations 130A - 130D. The time occasion may be an absolute time occasion or one that is relative to, e.g., offset from, a current time occasion.

The information may also indicate priority levels associated with the respective events E-1 to E-4 and therefore the event-triggered reports. The priority levels may be indicated in a specific field 134 of the reporting configurations 130A - 130D.

The priority levels may be used in accordance with example embodiments to be described later on.

The events E-1 to E-4 may relate to beam reporting events, although are not restricted thereto.

For example, the user terminal 122 may be capable of measuring RSs corresponding to a current beam and one or more "other" or "new" beams.

A quality metric such as L1-Reference Signal Received Power (L1-RSRP) may be measured. In other example embodiments, other quality metrics may additionally or alternatively be measured (such as L1-SINR).

The events E-1 to E-4 may comprise, although are not limited to, the following examples wherein associated triggering criteria is indicated:
E-1: a first event in which a quality metric of the current beam is worse than a certain threshold;
E-2: a second event in which a quality metric of at least one new beam becomes a threshold value better than the current beam;
E-3: a third event in which a quality metric of a new beam is better than a certain threshold; and
E-4: a fourth event in which a quality metric of the current beam is worse than a first threshold and the quality metric of at least one new beam is better than a second threshold.

In other example embodiments, the number of events may be less than four or greater than four.

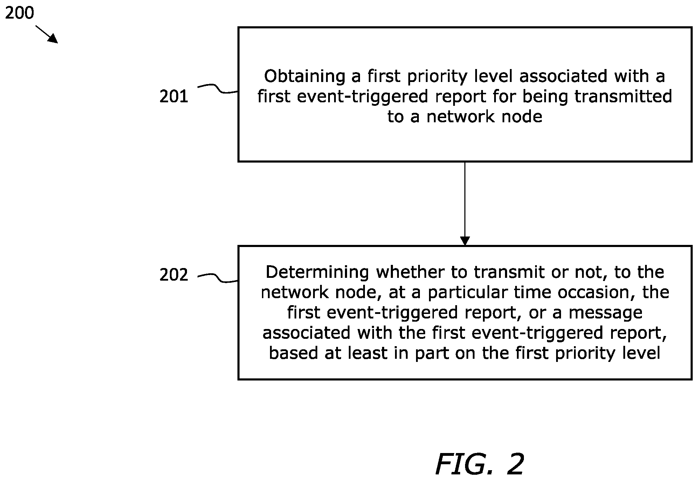

FIG. 2 is a flow diagram indicating operations 200 according to one or more example embodiments. The operations 200 may be performed in hardware, software, firmware or a combination thereof. For example, the operations 200 may be performed individually, or collectively, by a means, wherein the means may comprise at least one processor and at least one memory storing instructions that, when executed by the at least one processor, cause the performance of the operations. For example, the operations 200 may be performed by a user terminal, such as by the user terminal 122 of FIG. 1.

A first operation 201 may comprise obtaining a first priority level associated with a first event-triggered report for being transmitted to a network node.

The term "obtaining" in this context may mean receiving, accessing, deriving or similar.

A second operation 202 may comprise determining whether to transmit or not, to the network node at a particular time occasion, the first event-triggered report, or a message associated with the first event-triggered report, based at least in part on the first priority level.

In some example embodiments, the event triggered report may comprise a CSI report.

In some example embodiments, the message associated with the first event-triggered report may comprise at least one of: a request for uplink resource(s) for subsequently transmitting the first event-triggered CSI report; or an indication that the first event-triggered CSI report will be reported at a subsequent time occasion.

In some example embodiments, another operation may comprise obtaining a second priority level associated with a second event-triggered report for being transmitted to the network node at the particular time occasion.

In such an example, the second operation 202 may be performed based at least in part on the first and second priority levels.

In some example embodiments, the second operation 202 may be performed further based on identifying that an event that triggered the second event-triggered CSI report occurred within a predetermined time period, N, prior to the particular time occasion.

For example, the predetermined time period, N, may be received from a network node (i.e. configured by the network node) or is alternatively hard-coded in the user terminal 122.

For example, the predetermined time period, N, may be specified and applied by the user terminal 122 based on a technical specification, for example a 3GPP specification. In some example embodiments, in the event that the first priority level is higher than the second priority level, the second operation 202 may comprise determining to (i) transmit the first event-triggered CSI report, or the message associated with the first event-triggered CSI report, and (ii) not to transmit the second event-triggered CSI report, or the message associated with the second event-triggered CSI report, to the network node at the particular time occasion.

In some example embodiments the CSI may be reported in a MAC CE. In some example embodiments, any of the examples herein may be applied for or associated with MAC CE CSI reporting, MAC CE reporting, PUSCH CSI reporting or PUCCH CSI reporting.

In some example embodiments, in the event that the second priority level is higher than the first priority level, the second operation 202 may comprise determining to (i) transmit the second event-triggered CSI report, or the message associated with the first event-triggered CSI report, and (ii) not to transmit the first event-triggered CSI report, or the message associated with the first event-triggered CSI report, to the network node at the particular time occasion.

In some example embodiments, in the event that the first and second priority levels are the same, the second operation 202 may comprise determining to: transmit one of the first and second event-triggered CSI reports, or the message associated with the first or second event-triggered CSI reports, to the network node at the particular time occasion, based on one or more other parameter(s).

For example, the one or more other parameter(s) may comprise at least one of: a timing order at which first and second events, respectively associated with the first and second event-triggered CSI reports, occurred; respective payload sizes associated with the respective first and second event-triggered CSI reports; respective serving cell identifiers associated with the first and second events; or a network-configured parameter. In another example, the one or more other parameter(s) may comprise a coresetPoolIndex value used to schedule uplink resources, wherein the lowest value indicated the highest priority, or vice versa).

In some example embodiments, for event-based reporting, the report associated with lower serving cell identifier is prioritized.

In some example embodiments, for event-based reporting, the report associated with lower serving cell identifier may be used to determine a priority value for the event triggered report.

In some example embodiments, the serving cell that is SpCell (i.e. primary cell) is prioritized over other serving cell

In some example embodiments, priority level(s) referred to in the first operation 201 may be indicated by a numerical value or alternative indication.

In some example embodiments, a lower numerical value, such as zero or one, may indicate a relatively higher priority level (i.e., more important) and a higher numerical value, such as four, may indicate a relatively lower priority level (i.e., least important), or vice versa.

In some example embodiments, one or more priority level(s) may be configured and/or updated by the network node 120 or another network node (not shown). For example, the network node 120 or another network node may update one or more priority level(s) using a MAC Control Element (MAC CE).

In some example embodiments, the priority level associated with a particular event-triggered report may be indicated in a predetermined information field 134 of the associated reporting configuration 130A - 130D.

The reporting configuration 130A - 130D may be stored at, or accessed by, the user terminal 122.

In the event that there is no priority level associated with a particular event-triggered report, a lowest priority level may be assumed.

Alternatively, a reporting configuration identifier may determine the priority level. A lower configuration identifier may indicate higher priority.

Alternatively, one or more other parameter(s) may determine the priority level, for example at least one of: a timing order at which first and second events, respectively associated with the first and second event-triggered reports, occurred; respective payload sizes associated with the respective first and second event-triggered reports (for example largest payload may have the highest priority, or vice versa); respective serving cell identifiers associated with the first and second events (for example the smallest cell identifier may have the highest priority, or vice versa); or a network-configured parameter.

In some example embodiments, the above operations can be scaled-up to include one or more further priority levels (i.e., more than two priority levels) associated with one or more further event-triggered reports.

In some example embodiments, where the second operation 202 determines not to transmit a particular event-triggered report, or associated message, at the particular time occasion, that event-triggered report, or associated message, may remain pending; that is, it may be transmitted at a next available time occasion provided that no other event-triggered report, or associated message, having a higher priority level is to be transmitted at the next available time occasion.

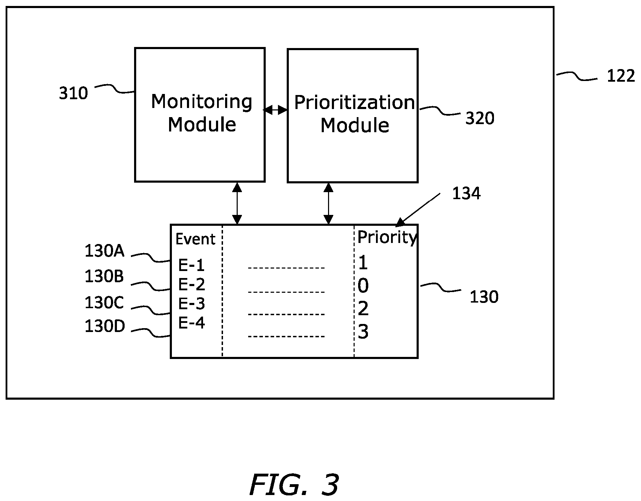

FIG. 3 is a block diagram of the FIG. 1 user terminal 122 comprising certain modules that may be relevant to example embodiments.

The user terminal 122 may comprise the above-mentioned configuration data 130.

The user terminal 122 may also comprise a monitoring module 310 for accessing from the configuration data 130 at least the triggering criteria for events E-1 to E-4.

The monitoring module 310 may be configured, in use, to determine based on received measurements whether a particular one or more events E-1 to E-4 is or are triggered and to perform further actions, such as those described above with reference to the second operation 202.

The monitoring module 310 may obtain one, or respective, priority levels from the information field 134 of the configuration data 130, for example in response to a particular event or events being triggered.

Alternatively, the user terminal 122 may further comprise a prioritization module 320 for accessing from the configuration data 130 the respective priority levels from the information field; the prioritization module 320 may indicate a priority order to the monitoring module 310, for example in response to the monitoring module indicating that a particular event or particular events has or have been triggered.

In the illustrated example, the first to fourth events E-1 to E-4 have the respective priority levels of "1", "0", "2" and "3", wherein a lower numerical value indicates a relatively higher priority level (i.e., most important) and a higher numerical value indicates a relatively lower priority level (least important). It follows that the second event E-2 has the highest priority level and the fourth event E-4 has the lowest priority level. In some examples, the event may be configured with specific priority value. In a further example, the report triggered on the reporting configuration may use the priority value of the event to determine priority (between different events and/or other CSI report time types).

In one example, the CSI report time types may include aperiodic, semi persistent or periodic.

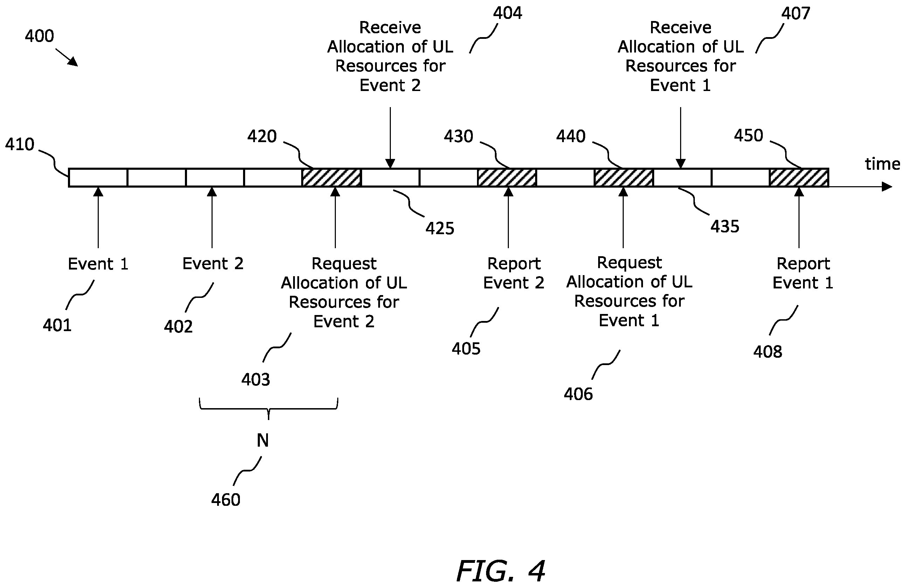

FIG. 4 illustrates an example event timing diagram 400 in which first and second events occur at the user terminal 122 in accordance with some example embodiments.

The event timing diagram 400 includes a timeline 410 divided into time units which may comprise any form of time unit, e.g., slots, symbols or milliseconds.

In the illustrated example, a first event 401 is triggered and a second event 402 is subsequently triggered.

It is assumed that both the first event 401 and the second event 402 require the network, e.g., the network node 120, to allocate uplink resources for transmitting respective first and second event reports. The user terminal 122 may therefore determine that it is required to request from the network node 120 allocation of uplink resources associated with transmitting the first and second event reports.

A next available time occasion for transmitting an event report and/or message for requesting allocation of uplink resources is, in this example, a first time occasion 420.

In accordance with some example embodiments, the user terminal 122 may optionally determine that it can only send one of the first and second event reports and/or messages for requesting allocation of uplink resources for first and second event reports, at this first time occasion 420.

In accordance with some example embodiments, the user terminal 122 may optionally also determine that the second event 402 occurred, or was triggered, within a predetermined time period, N, 460 prior to the first time occasion 420.

The predetermined time period, N, 460 may be defined in terms of symbols, slots or milliseconds, for example.

The user terminal 122 may responsively obtain the respective priority levels "1", "0", associated with the first and second events 401, 402 (or first and second event reports).

The user terminal 122 may determine not to transmit at the first time occasion 420 a message for requesting allocation of uplink resources for a first event report, because in this example the respective priority level "1" indicates a lower priority level than that of the second event report, which is "0". The user terminal 122 may instead determine to transmit a message 403 at the first time occasion 420 for requesting allocation of uplink resources for a second event report, which has a higher priority level.

The user terminal 122 may subsequently receive a message 404 at a subsequent time 425 in which uplink resources are allocated for reporting a second event report at a second time occasion 430.

The user terminal 122 may subsequently transmit a second event report 405, at the second time occasion 430.

Optionally, the user terminal 122 may defer and subsequently transmit a message 406 at a third time occasion 440, for requesting allocation of uplink resources for the first event report.

The user terminal 122 may subsequently receive a message 407 at a subsequent time in which uplink resources are allocated for reporting a first event report at a fourth time occasion 450.

The user terminal 122 may subsequently transmit a first event report 408, at the fourth time occasion 450.

The same prioritization procedure can be applied, for example in the case that the second event 402 occurred, or was triggered, within the predetermined time period, N 460 (or alternatively a different predetermined time period) prior to an allocated reporting occasion for transmitting the first event report. In this case, the allocated reporting occasion for the first event report may instead be used to transmit the second event report or the request for allocation of uplink resources for the second event report.

It will be appreciated from the above that the process can be scaled-up for more than two events, for example up to four events in this particular example, provided respective priority levels can be obtained or derived.

In some example embodiments, the events and associated reports may be associated with beam reporting events at the user terminal 122. For example, the events may be associated with at least one of:
a first event in which a quality metric of the current beam is worse than a certain threshold;
a second event in which a quality metric of at least one new beam becomes a threshold value better than the current beam;
a third event in which a quality metric of a new beam is better than a certain threshold; or
a fourth event in which a quality metric of the current beam is worse than a first threshold and the quality metric of at least one new beam is better than a second threshold.

Other events are not precluded from this list.

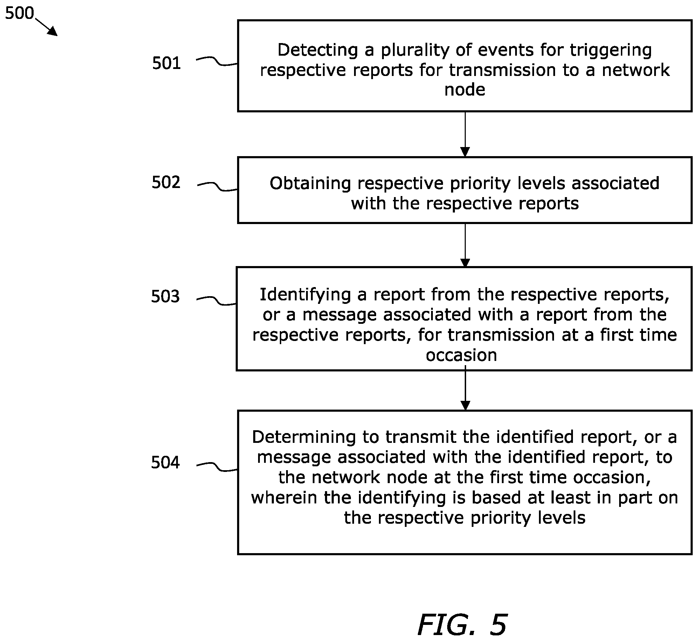

FIG. 5 is a flow diagram indicating operations 500 according to one or more other example embodiments. The operations 500 may be performed in hardware, software, firmware or a combination thereof. For example, the operations 500 may be performed individually, or collectively, by a means, wherein the means may comprise at least one processor and at least one memory storing instructions that, when executed by the at least one processor, cause the performance of the operations. For example, the operations 500 may be performed by a user terminal, such as by the user terminal 122 of FIG. 1.

A first operation 501 may comprise detecting a plurality of events for triggering respective reports for transmission to a network node.

The respective reports may be CSI reports.

Because the events are triggered at the user terminal 122, the respective reports may be termed user terminal or user equipment -initiated beam management (UEIBM) reports.

A second operation 502 may comprise obtaining respective priority levels associated with the respective reports.

The term "obtaining" in this context may mean receiving, accessing, deriving or similar.

A third operation 503 may comprise identifying a report from the respective reports, or a message associated with a report from the respective reports, for transmission at a time occasion.

A fourth operation 504 may comprise determining to transmit the identified report, or a message associated with the identified report, to the network node at the first time occasion, wherein the selection is based at least in part on the respective priority levels.

In some example embodiments, the first time occasion is selected from a set, e.g., a pool, of available time occasions (which may be provided in reporting configurations, for example) and is the time occasion which occurs next after detecting the plurality of events.

In some example embodiments, the fourth operation 504 may be further based on identifying that the event that triggered the identifed report occurred within a time period, N, prior to the first time occasion. As described above, time period, N, may be predetermined and received from a network node or is alternatively hard-coded in the user terminal 122.

In some example embodiments, the identified report is that associated with the highest priority level.

In some example embodiments, another operation may comprise determining to transmit a different identified report, or a message associated with the different identified report, to the network node at a second time occasion, being after the first time occasion. The different selected identified report may be that associated with the next-available highest priority level.

In some example embodiments, in the event that respective priority levels associated with two or more respective reports indicate a same priority level, the identification may be based on one or more other parameter(s). The one or more other parameter(s) may comprise at least one of: a timing order at which first and second events, respectively associated with the first and second event-triggered reports, occurred; respective payload sizes associated with the respective first and second event-triggered reports; respective serving cell identifiers associated with the first and second events; or a network-configured parameter. In another example, the one or more other parameter(s) may comprise a coresetPoolIndex value used to schedule uplink resources, wherein the lowest value indicates the highest priority, or vice versa.

In some example embodiments, the message associated with the identified report may comprise at least one of: a request for uplink resource(s) for subsequently transmitting the identified report; or an indication that the identified report will be reported at a subsequent time occasion; or an indication of an event associated with the identified report.

In some example embodiments, the user terminal 122 may store respective reporting configurations associated with the respective reports, wherein the respective priority levels comprise respective values indicated in a predetermined field of the respective reporting configurations. The respective reporting configurations may also be indicative of the respective events that trigger the respective reports.

In some example embodiments, the respective priority levels may comprise respective numerical values. For example, a lower numerical value may indicate a higher priority level, or vice versa.

In some example embodiments, another operation may comprise receiving at least one updated priority level from the network node or another network node.

In some example embodiments, a report of the respective reports is associated with respective beam reporting events. For example, the respective reports may be associated with at least one of:
a first event in which a quality metric of the current beam is worse than a quality threshold;
a second event in which a quality metric of at least one new beam becomes a threshold value better than the current beam;
a third event in which a quality metric of a new beam is better than a quality threshold; or
a fourth event in which a quality metric of the current beam is worse than a first quality threshold and the quality metric of at least one new beam is better than a second quality threshold.

Other events are not precluded from this list.

Features described in relation to FIG. 2 are also applicable to the operations described for FIG. 5.

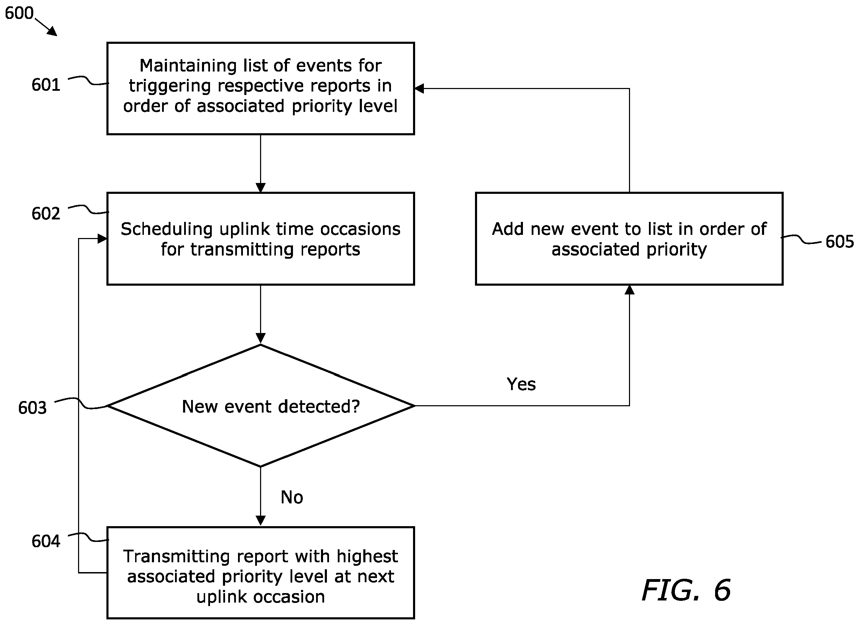

FIG. 6 is a flow diagram indicating operations 600 according to one or more other example embodiments. The operations 600 may be performed in hardware, software, firmware or a combination thereof. For example, the operations 600 may be performed individually, or collectively, by a means, wherein the means may comprise at least one processor and at least one memory storing instructions that, when executed by the at least one processor, cause the performance of the operations. For example, the operations 600 may be performed by a user terminal, such as by the user terminal 122 of FIG. 1.

A first operation 601 may comprise maintaining a list of events for triggering respective reports, e.g., CSI or UEIBM reports, which may be maintained in order of associated priority level.

Taking the FIG. 3 reporting configurations 130A - 130D as examples, the list may comprise the ordered list:
E-2: priority level 0;
E-1: priority level 1;
E-3: priority level 2; and
E-4: priority level 3.

A second operation 602 may comprise scheduling uplink time occasions for transmitting reports (or messages associated with said reports).

Taking the FIG. 4 timeline 410 as an example, the uplink time occasions may comprise at least some of the first to fourth time occasions 420, 430, 440, 450.

A third operation 603 may determine if a new event is detected.

If the third operation 603 determines that no new event is detected, a fourth operation 604 may comprise transmitting the report associated the highest priority level at the next uplink occasion.

Therefore, the report associated with event E-2 may be transmitted at the first time occasion 420 even if one or more of the other events E-1, E-3, E-4 was or were triggered earlier in time.

The event E-2 may be removed from the maintained list at this time, in which case the list is updated such that event E-1 has the highest priority level.

If the third operation 603 determines that a new event is detected, a fifth operation 605 may comprise adding the new event to the maintained list, for example in the order of associated priority.

Therefore, if after event E-2 is removed from the maintained list, a new event E-5 is detected with an associated priority level 1, it may be added to the updated list which then comprises:
E-1: priority level 1;
E-5: priority level 1;
E-3: priority level 2; and
E-4: priority level 3.

Then, a next iteration of the fourth operation 604 will determine that two events, E-1, E-5, have the same priority level and hence at least one further parameter may be used to determine which report or associated message will be transmitted at the second time occasion 430.

For example, the determination may be based on at least one of: a timing order at which first and fifth events E-1, E-5 occurred, respective payload sizes associated with the respective first and fifth reports, respective serving cell identifiers associated with the first and fifth events E-1, E-5, or a network-configured parameter.

Assuming the timing order at which the first and fifth events E-1, E-5 occurred is used, the report or associated message for the first event E-1 will be transmitted at the second time occasion 430.

Features described in relation to FIG. 2 and FIG. 5 are also applicable to the operations described for FIG. 6.

In any of the above examples, other example embodiments may provide one or more operations performed at a network node, for example at the network node 120 in FIG. 1. For example, the network node 120, or another network node, may configure the user terminal 122 (or multiple user terminals) with the above-mentioned one or more priority levels. For example, the network node 120 may configure the user terminal 122 with at least one priority level associated with a respective at least one event-triggered reporting configuration, or a message associated with the at least one event-triggered reporting configuration. In this context, the term "configure" may comprise the network node 120 providing or generating the at least one event-triggered reporting configuration, including the at least one priority level, and transmitting it to the user terminal 122, or cause updating of at least one existing event-triggered reporting configuration at the user terminal 122 with the at least one priority level.

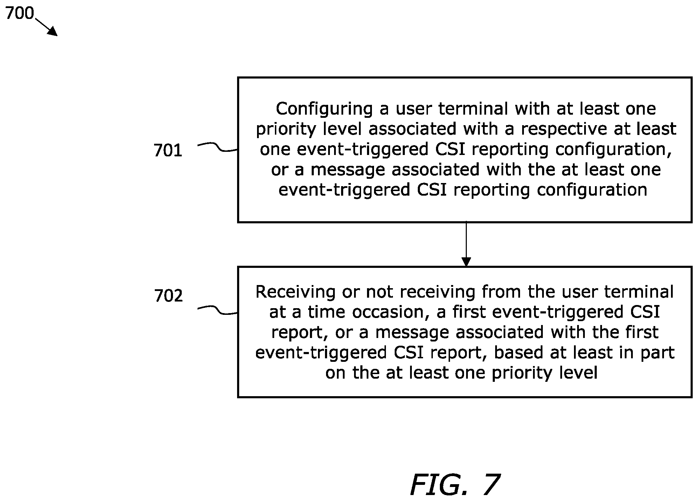

FIG. 7 is a flow diagram indicating operations 700 according to one or more other example embodiments. The operations 700 may be performed in hardware, software, firmware or a combination thereof. For example, the operations 700 may be performed individually, or collectively, by a means, wherein the means may comprise at least one processor and at least one memory storing instructions that, when executed by the at least one processor, cause the performance of the operations. For example, the operations 700 may be performed by a network node, such as by the network node 120 of FIG. 1.

A first operation 701 may comprise configuring a user terminal with at least one priority level associated with a respective at least one event-triggered CSI reporting configuration, or a message associated with the at least one event-triggered CSI reporting configuration.

A second operation 702 may comprise receiving or not receiving from the user terminal at a time occasion, a first event-triggered CSi report, or a message associated with the first event-triggered CSI report, based at least in part on the at least one priority level.

### Example Apparatus

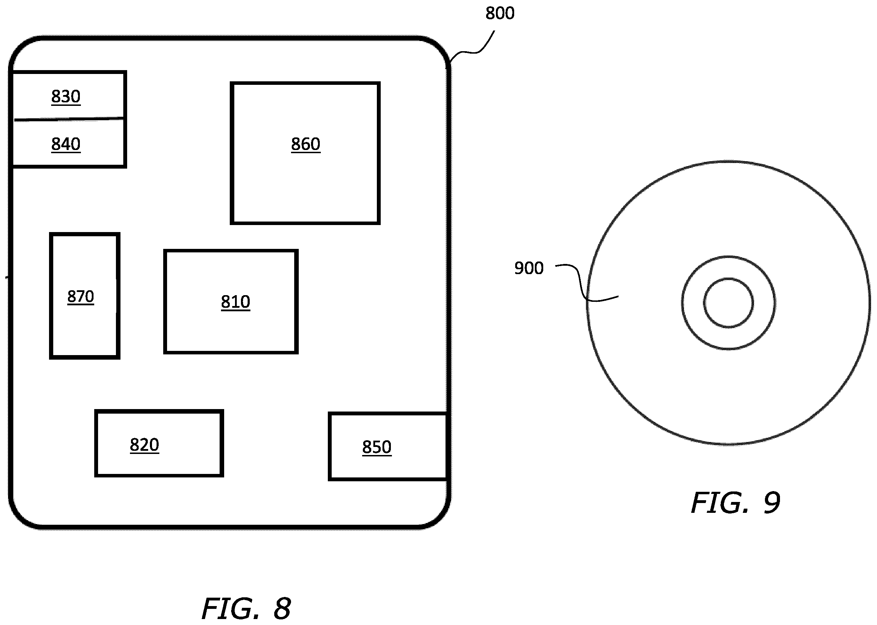

FIG. 8 illustrates an example apparatus 800 capable of supporting at least some embodiments. Illustrated is a device 800, which may comprise the user terminal 122 described above or a device configured to control the functioning thereof. Alternatively, the device 800 may comprise a network entity 120 described above. Comprised in device 800 is a processor 810, which may comprise, for example, a single- or multi-core processor wherein a single-core processor comprises one processing core and a multi-core processor comprises more than one processing core. The processor 810 may comprise, in general, a control device. The processor 810 may comprise more than one processor. The processor 810 may be a control device. The processor 810 may comprise at least one Application-Specific Integrated Circuit, ASIC. The processor 810 may comprise at least one Field-Programmable Gate Array, FPGA. The processor 810 may be means for performing method steps stored in device 800. The processor 810 may be configured, at least in part by computer instructions, to perform actions.

A processor may comprise circuitry, or be constituted as circuitry or circuitries, the circuitry or circuitries being configured to perform phases of methods in accordance with
embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as the network entity 120, or a device configured to control the functioning thereof, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The device 800 may comprise a memory 820. The memory 820 may comprise random access memory and/or permanent memory. The memory 820 may comprise at least one RAM chip. The memory 820 may comprise solid-state, magnetic, optical and/or holographic memory, for example. The memory 820 may be at least in part accessible to processor 810. The memory 820 may be at least in part comprised in processor 810. The memory 820 may be means for storing information. The memory 820 may comprise computer instructions that processor 810 is configured to execute. When computer instructions configured to cause the processor 810 to perform certain actions are stored in the memory 820, and the device 800 overall is configured to run under the direction of the processor 810 using computer instructions from the memory 820, the processor 810 and/or its at least one processing core may be considered to be configured to perform said certain actions. The memory 820 may be at least in part comprised in the processor 810. The memory 820 may be at least in part external to the device 800 but accessible to the device 800.

The device 800 may comprise a transmitter 830. The device 800 may comprise a receiver 840. The transmitter 830 and the receiver 840 may be configured to transmit and receive, respectively, information in accordance with at least one cellular or non-cellular standard.

The transmitter 830 may comprise more than one transmitter. The receiver 840 may comprise more than one receiver. The transmitter 830 and/or the receiver 840 may be configured to operate in accordance with Global System for Mobile Communication, GSM, Wideband Code Division Multiple Access, WCDMA, 5G/NR, 5G-Advanced, i.e., NR Rel-18, 19 and beyond, Long Term Evolution, LTE, IS-95, Wireless Local Area Network, WLAN, Ethernet and/or Worldwide Interoperability for Microwave Access, WiMAX, standards, for example.

The device 800 may comprise a Near-Field Communication, NFC, transceiver 850. The NFC transceiver 850 may support at least one NFC technology, such as NFC, Bluetooth, Wibree or similar technologies.

The device 800 may comprise a User Interface, UI, 860. The UI 860 may comprise at least one of a display, a keyboard, a touchscreen, a vibrator arranged to signal to a user by causing device 800 to vibrate, a speaker and a microphone. A user may be able to operate the device 800 via the UI 860, for example to accept incoming telephone calls, to originate telephone calls or video calls, to browse the Internet, to manage digital files stored in memory 820 or on a cloud accessible via the transmitter 830 and the receiver 840, or via NFC transceiver 850, and/or to play games.

The device 800 may comprise or be arranged to accept a user identity module 870. The user identity module 870 may comprise, for example, a Subscriber Identity Module, SIM, card installable in device 800. The user identity module 870 may comprise information identifying a subscription of a user of device 800. The user identity module 870 may comprise cryptographic information usable to verify the identity of a user of device 800 and/or to facilitate encryption of communicated information and billing of the user of the device 800 for communication effected via device 800.

The processor 810 may be furnished with a transmitter arranged to output information from processor 810, via electrical leads internal to the device 800, to other devices comprised in the device 800. Such a transmitter may comprise a serial bus transmitter arranged to, for example, output information via at least one electrical lead to the memory 820 for storage therein. Alternatively to a serial bus, the transmitter may comprise a parallel bus transmitter.

Likewise the processor 810 may comprise a receiver arranged to receive information in The processor 810, via electrical leads internal to the device 800, from other devices comprised in the device 700. Such a receiver may comprise a serial bus receiver arranged to, for example, receive information via at least one electrical lead from the receiver 840 for processing in the processor 810. Alternatively to a serial bus, the receiver may comprise a parallel bus receiver.

The device 800 may comprise further devices not illustrated in Figure 8. For example, where the device 800 comprises a smartphone, it may comprise at least one digital camera. Some devices 800 may comprise a back-facing camera and a front-facing camera, wherein the back-facing camera may be intended for digital photography and the front-facing camera for video telephony. The device 800 may comprise a fingerprint sensor arranged to authenticate, at least in part, a user of the device 800. In some embodiments, the device 800 lacks at least one device described above. For example, some devices 800 may lack a NFC transceiver 850 and/or user identity module 870.

The processor 810, memory 820, transmitter 830, receiver 840, NFC transceiver 850, UI 860 and/or user identity module 870 may be interconnected by electrical leads internal to the device 800 in a multitude of different ways. For example, each of the
aforementioned devices may be separately connected to a master bus internal to the device 800, to allow for the devices to exchange information. However, as the skilled person will appreciate, this is only one example and depending on the embodiment various ways of interconnecting at least two of the aforementioned devices may be selected without departing from the scope of the present invention.

Figure 9 shows a non-transitory media 900 according to some embodiments. The non-transitory media 900 is a computer readable storage medium. It may be e.g. a CD, a DVD, a USB stick, a blue ray disk, etc. The non-transitory media 900 stores computer program instructions, causing an apparatus to perform the method of any preceding process for example as disclosed in relation to the flow diagrams in this specification and related features thereof.

The described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the embodiments in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in dependant claims are mutually freely combinable unless otherwise explicitly stated. Furthermore, it is to be understood that the use of "a" or "an", that is, a singular form, throughout this document does not exclude a plurality.

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example, performing such functionality or functionalities may be caused in an apparatus by a processor that executes instructions stored in a memory of the apparatus.

## Claims

1. An apparatus, comprising:
means for detecting a plurality of events for triggering respective reports for transmission to a network node;
means for obtaining respective priority levels associated with the respective reports;
means for identifying a report from the respective reports, or a message associated with a report from the respective reports, for transmission at a first time occasion; and
means for determining to transmit the identified report, or a message associated with the identified report, to the network node at the first time occasion,
wherein the identifying is based at least in part on the respective priority levels.

2. The apparatus of claim 1,
wherein the first time occasion is selected from a set of available time occasions and is that which occurs after detecting the plurality of events.

3. The apparatus of claim 1 or claim 2,
wherein the means for determining is configured to determine to transmit the identified report, or the message associated with the identified report, further based on:
identifying that the event that triggered the identified report occurred within a time period, N, prior to the first time occasion.

4. The apparatus of claim 3, wherein
the time period, N, is received from a network node; or
the time period, N, is hard-coded in the apparatus.

5. The apparatus of any preceding claim,
wherein the identified report is that associated with the highest priority level.

6. The apparatus of any preceding claim,
wherein in the event that respective priority levels associated with two or more respective reports indicate a same priority level,
the identification is based on one or more other parameter(s).

7. The apparatus of claim 6,
wherein the one or more other parameter(s) comprise at least one of:
a timing order at which the events that triggered the two or more respective reports, occurred;
respective payload sizes associated with the respective two or more reports;
respective serving cell identifiers associated with the events which triggered the two or more respective report; or
a network-configured parameter.

8. The apparatus of any preceding claim,
wherein the message associated with the identified report comprises at least one of:
a request for uplink resource(s) for subsequently transmitting the identified report; or
an indication that the identified report will be reported at a subsequent time occasion.

9. The apparatus of any preceding claim, further comprising:
means for storing respective reporting configurations associated with the respective reports, and
wherein the respective priority levels comprise respective values indicated in a predetermined field of the respective reporting configurations.

10. The apparatus of any preceding claim, further comprising:
means for receiving at least one updated priority level from the network node or another network node.

11. The apparatus of any preceding claim, wherein
the respective reports are associated with respective beam reporting events.

12. The apparatus of claim 11, wherein
a report of the respective reports is associated with at least one of:
an event in which a quality of a current beam is worse than a quality threshold;
an event in which a quality of at least one new beam becomes a threshold value better than a current beam;
an event in which a quality of a new beam is better than a quality threshold; or
an event in which a quality of a current beam is worse than a first quality threshold and a quality of at least one new beam is better than a second threshold.

13. The apparatus of any preceding claim, wherein the apparatus is a user terminal.

14. A method, comprising:
detecting a plurality of events for triggering respective reports for transmission to a network node;
obtaining respective priority levels associated with the respective reports;
identifying a report from the respective reports, or a message associated with a report from the respective reports, for transmission at a first time occasion; and
determining to transmit the identified report, or a message associated with the identified report, to the network node at the first time occasion,
wherein the identifying is based at least in part on the respective priority levels.

15. A non-transitory computer-readable medium having stored thereon computer-readable code, which, when executed by at least one processor, causes the at least one processor to perform a method, comprising:
detecting a plurality of events for triggering respective reports for transmission to a network node;
obtaining respective priority levels associated with the respective reports;
identifying a report from the respective reports, or a message associated with a report from the respective reports, for transmission at a first time occasion; and
determining to transmit the identified report, or a message associated with the identified report, to the network node at the first time occasion,
wherein the identifying is based at least in part on the respective priority levels.
